# EUROPEAN PATENT SPECIFICATION

(11) **EP 0 805 591 B1**
(45) Date of publication and mention of the grant of the patent: **03.07.2002**
(21) Application number: 97107041.2
(22) Date of filing: 29.04.1997
(51) Int. Cl.: H04N 7/12

(54) **Apparatus for transmitting television broadcasting program and apparatus for receiving television broadcasting program**
Vorrichtungen zum Aussenden und Empfangen von Fernsehprogrammen
Dispositif de transmission de programmes de télévision et dispositif de réception des programmes de télévision

(30) Priority: 02.05.1996 JP 11167696; 28.01.1997 JP 1363797
(43) Date of publication of application: 05.11.1997
(73) Proprietor: MATSUSHITA ELECTRIC INDUSTRIAL CO., LTD., Kadoma-shi, Osaka 571-8501 (JP)
(72) Inventor: Aoki, Norio, Hirakatashi, Koganeno 2-16-5, 573 (JP); Yoneda, Yasushi, Ikedashi, Fushiodai 2-9-1 2-193, 563 (JP)
(74) Representative: Kügele, Bernhard

(56) References cited:
- EP-A- 0 598 576
- WO-A-95/15646
- WO-A-95/28794
- WO-A-95/28795

## Description

### FIELD OF THE INVENTION

The present invention relates to an apparatus for transmitting a TV broadcasting program and an apparatus for receiving a TV broadcasting program and, more particularly to one which has a display format of an electronic program guide for displaying TV program information on a monitor with improved degree of freedom.

### BACKGROUND OF THE INVENTION

Conventionally, in a TV receiver in analog form broadcasted at home, a viewer chooses a broadcasting station by choosing a channel of a program which the viewer demands, referring to programs described in a newspaper or a magazine. However, when a program is suddenly changed due to interruption of a temporary program or the like, the viewer cannot see a desired program. In view of this, for example, as described in Japanese Patent Application No. JP-A-52 084479, TV program information is transmitted utilizing character broadcasting and the TV program information is analyzed to display a TV program table on the monitor in a receiver. Some cable TVs or the like provide an electronic program guide (EPG) service in which a screen of each program is miniaturized as a motion picture and a plurality of segments of the miniaturized screen is disposed on a screen and transmitted through a channel. Thanks to this service, conveniently, the viewer can utilize the latest program information using not characters but video images.

In the conventional apparatus for transmitting a TV broadcasting program and apparatus for receiving a TV broadcasting program constructed described above, a program content of each program can be referred to on the monitor through a dedicated EPG channel. However, a video image for the EPG channel is produced by editing a program content of each program in a broadcasting station. Therefore, the viewer cannot dispose and refer to a video image of a desired program in an arbitrary position on the plurality of segmented screens, so that the viewer can only refer to the EPG in a prescribed format created in the broadcasting station.

In recent years, broadcasting in digital system has been developed in place of broadcasting in analog system. Attention has been paid to the digital system, since it can provide various services which the analog system cannot realize. The digital system can provide several tens to several hundreds of channels as programs, so that the EPG service becomes important. However, in the existing EPG service system described above, since only an edition of many programs performed by the broadcasting station is received, the viewer has too many alternatives to choose a program, leading to a problematic situation such as complicated choice of programs.

Reference is made to WO 95/28794 which relates to an MPEG2-based transmission system in which a large number of digital television programs in a single physical channel are transmitted. A "Channel Navigation System" is disclosed which allows a user to get an overview of the digital programs provided, and to easily select a desired program. The method includes the transmission (in a separate program of a transport stream) of a video stream representing a mosaic picture, the sub-pictures of which are miniature versions of the video stream of other programs in that transport stream. The method further includes the transmission of information which links the position of each sub-picture within the mosaic picture with the program number from which the sub-picture is derived. The user selects a desired program by merely "pointing and clicking" its miniature version in the mosaic picture.

Reference is also made to EP-A-0598576 which describes a television signal transmission and reception system including a broadcasting center, a transmission network (and many reception terminals). In the broadcasting center, plural television signals corresponding to individual channels are modulated into transmittable form, and a synthesis circuit synthesizes the television signals to produce a synthesis image signal for a multi-screen display comprising plural small screens. Both the ordinary television signal and the synthesis image signal is transmitted with control information to the reception terminals through the transmission network. In the reception terminal, for selecting a desired channel out of the individual channels, the synthesis image signal is used for displaying a multi-screen, a moveable cursor image is superimposed on the multi-screen for designating one small screen corresponding to the desired channel. The channel designated by the cursor image is detected based on the control information, and the television signal of the designated channel is demodulated.

Reference is also made to WO 95/28795 which describes an arrangement for deriving an ancillary signal from a compressed digital video signal (e.g. MPEG). The ancillary signal comprises selected parts of the main signal, for example, the DC coefficients of I-pictures, or the unscrambled parts. The ancillary signal thus obtained can be used for display in a (multi-) picture-in-picture television receiver, or as an "appetizer" in order to encourage the user to pay a subscription fee. The ancillary signal can saeparately be recorded in digital video recorders so as to assist the user in finding the beginning of a scrambled program on tape. The ancillary signal can also be generated at the transmitter end and transmitted at a low bit rate. A decoder for decoding such an ancillary signal is considerably simpler and less expensive than a full-spec MPEG decoder.

### SUMMARY OF THE INVENTION

It would be desirable to provide an apparatus for transmitting a TV broadcasting program and an apparatus for receiving a TV broadcasting program, which can change and customize a layout or the like when the viewer refers to the EPG, making the best use of advantages of digital broadcasting.

In a first aspect, the invention provides an apparatus for transmitting a TV broadcasting program comprising:
a multiplexer for time-dividing video images of programs of a plurality of channels for promotion to produce an electronic program guide EPG channel consisting of the time-divided images, and for multiplexing and outputting the time-divided video images and video images of programs of normal channels.

In a second aspect, the invention provides an apparatus for receiving a TV broadcast, the apparatus being operable to receive, decode and display transmitted data relating to a channel for promotion, the apparatus comprising:
video image extracting means for decoding the received data, extracting a selected video image of a program of a prescribed channel among the decoded data, and editing data of an electronic program guide EPG channel, thereby to create a new electronic program guide EPG screen video image; and
video image display position control means for controlling the display of the edited EPG screen video image so that the video image of the program of the extracted channel is displayed at a prescribed position on a divided screen.

Preferably, the video image extracting means comprises means for extracting a selected video image from video images of a plurality of channels arranged by screen division.

Preferably, the video image extracting means comprises means for extracting a selected video image from multiple time divided images.

Preferably, the apparatus further comprises program character information synthesising means for synthesising program character information based on received program character information with respect to each program, the program character information representing a content corresponding to a video image displayed in a prescribed position by the video image display position control means, to be displayed with the video image on said divided screen.

As described above, according to one aspect of the present invention, in the broadcasting station, program video image information of a plurality of programs for promotion is digitally encoded and transmitted through. a promotion channel as a channel, and in the receiver, program video image information of a program of a channel corresponding to a program specified by the viewer is extracted form the promotion channel transmitted as the multi screen and displayed with display position moved on the screen as required. Therefore, the content of the promotion channel edited in the transmission station can be edited and displayed, specified by the viewer as the viewer likes, and information of a desired program among many programs can be obtained with efficiency, so that efficiency in choosing a program is increased.

In addition, the video image of the program for each one promotion channel is transmitted by time division as a stream through the promotion channel, and only a program of a channel specified by the viewer is extracted from the promotion channel transmitted by time division and displayed moving a display position so that a video image of a specified channel is displayed in a specified position on a screen in displaying the same by screen division.

Therefore, contents of the promotion channel edited in the braodcasting station can be edited and displayed, specified by the viewer, and information of a desired program among many programs can be obtained with efficiency, so that efficiency in choosing a program is increased. In addition, a plurality of streams of the video image and the sound can be transmitted through a promotion channel. Therefore, more program information about a program can be provided.

Further, character information corresponding to a video image of each program for promotion is synthesized with the video image and displayed, thereby additional information for each program can be provided using character, so that service can be improved.

Other objects and advantages of the present invention will become apparent from the detailed description given hereinafter. It should be understood, however, that the detailed description and specific embodiment are given by way of illustration only, since various changes and modifications within the scope of the invention will apparent to those skilled in the art from this detailed description.

### BRIEF DESCRIPTION OF THE DRAWINGS

Figure 1 is a block diagram for illustrating an apparatus for transmitting a TV broadcasting program.
Figure 2 is a block diagram for illustrating an apparatus for receiving a TV broadcasting program from the transmitter of Figure 1, according to an example relating to the present invention.
Figure 3 (a) and 3 (b) are diagrams for explaining a display status of program information in a video image display means of an apparatus for receiving TV broadcasting programs according to an embodiment of the present invention.
Figure 4 is a block diagram for illustrating an apparatus for transmitting TV broadcasting programs according to the embodiment of the present invention.

### DETAILED DESCRIPTION OF THE PREFERRED EMBODIMENTS

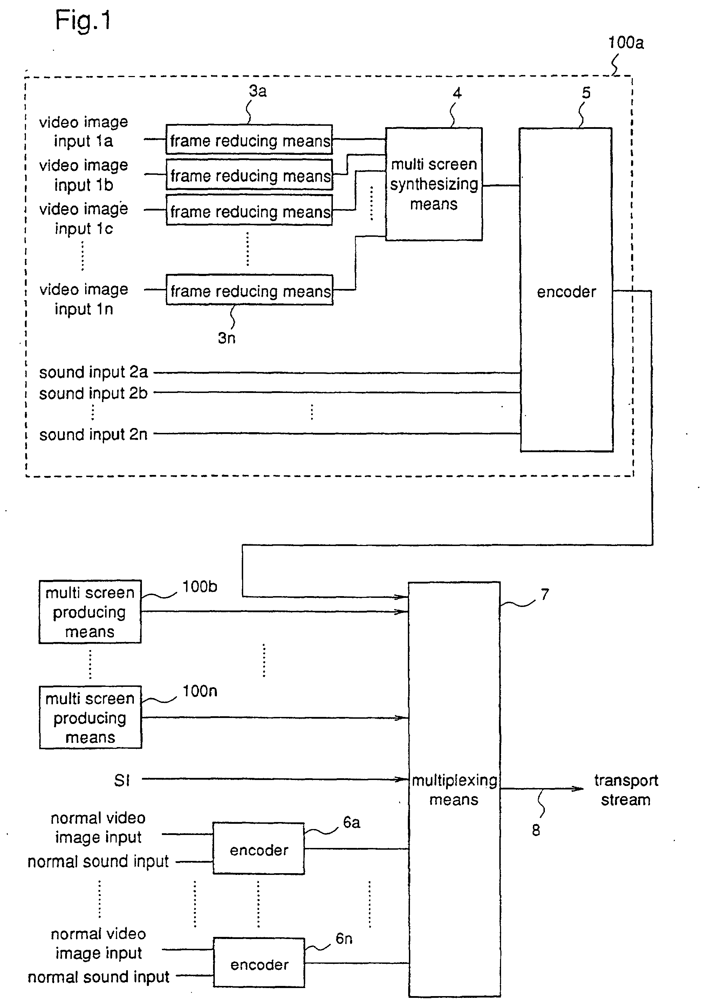

Figure 1 is a block diagram illustrating an apparatus for transmitting TV broadcasting programs according to an example relating to the present invention. In figure 1, reference characters 1a-1n designate analog video input signals in n channels for promotion and reference characters 2a-2n designate n sound input signals corresponding to the analog video input signals in the n channels, where a stream ID corresponding to each sound is included. Reference characters 3a-3n designate n frame reducing means provided correspondingly to the analog video image input signals 1a-1n, and in the frame reducing means, for example, frame reducing processing in each frame is performed to reduce data which is to be output to the next stage. Reference numeral 4 designates a multi screen synthesizing means for synthesizing each video signal by receiving an output of each frame reducing means 3a-3n and dividing a screen into a plurality of segments so that an input program video image of each program for promotion is displayed as program video image information. Reference numeral 5 designates a video image 1 system/sound n system input encoder for receiving an output of the multi screen synthesizing means 4 and the n sound input signals, and in MPEG 16 programs can be managed at its most. A multi screen producing section 100a which produces one multi screen comprises components described-above. Actually, a plurality of multi screen producing sections (100a-100n) are provided, by which n multi screens can be produced.

Reference characters 6a-6n designate encoders provided correspondingly to a plurality of analog video input signals in normal broadcasting and sound signals in normal broadcasting and each set of video signal and sound signal are input to the encoders, respectively. Reference numeral 7 designates a multiplexing means for receiving outputs of the n multi screen producing means 100a-100n, outputs of the encoders 6a-6n, and service information (SI), as inputs and outputting a transport stream 8. The SI is supplied with program character information corresponding to each promotion channel, corresponding information between a video image position and a sound of each program on multi screen in the promotion channel, and information as to correspondence between program video image information/sound and the program character information, digitally encoded. The SI is included in the transport stream 8 as a stream of service information, to be transmitted.

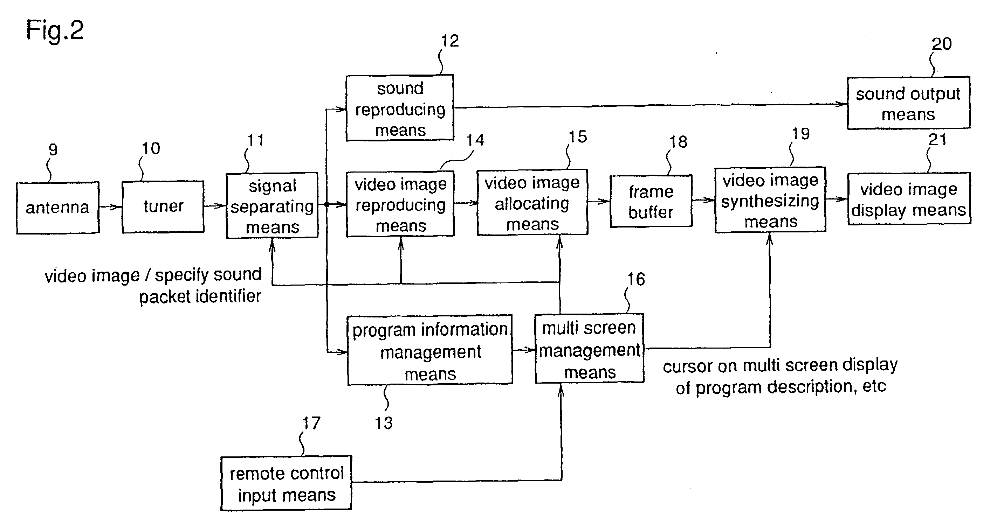

Figure 2 is a block diagram illustrating an apparatus for receiving a TV broadcasting program according to the example. In figure 2, reference numeral 9 designates an antenna for receiving the transport stream 8 which is transmitted in radio waves. Reference numeral 10 designates a tuner for selecting a frequency to receive radio waves of digital broadcasting, decoding the same into digital signals, and conducting error correction.

Reference numeral 11 designates a signal separating means for selecting the promotion channel or the normal program among a plurality of channels, separating and extracting program video image information, sound signals and program character information in the promotion channel, and separating and extracting a video image and a sound in the normal program, from digital signals received by the tuner 10, by selecting a packet identifier (PID) in the MPEG. Reference numeral 12 designates a sound reproducing means for decoding and reproducing a sound digitally compressed by the MPEG or the like. Reference numeral 13 designates a program information management means for obtaining and managing program character information extracted by the signal separating means 11. Reference numeral 14 designates a video image reproducing means for decoding and reproducing the video image compressed by the MPEG or the like. Reference numeral 15 designates a video image allocating means for allocating selected program video image information in a specified range as required, enlarging/reducing the allocated program video image information to specified-sized one, and writing the enlarged/reduced video image information into a frame buffer 18 for storing data output from the video image allocating means 15 so that it is moved to a specified location. Reference numeral 16 designates a multi screen management means for controlling each operation of the signal separating means 11, the video image reproducing means 14, the video image allocating means 15 and the video image synthesizing means 19 mentioned later. Reference numeral 19 designates a video image synthesizing means for synthesizing the video image of the frame buffer 18 with a graphic such as a cursor or text (program character information). Reference numeral 20 designates a sound outputting means for outputting a sound reproduced by the sound reproducing means, such as a speaker. Reference numeral 21 designates a video image display means for displaying the video image synthesized by the video image synthesizing means 19, such as CRT (color brown tube).

A description is given of an operation.

In the apparatus for transmitting a TV broadcasting program illustrated in figure 1, i.e., transmission side, n analog video signal inputs 1a-1n for promotion are frame-reduced in each frame by frame reducing means 3a-3n, respectively with a frame rate changed to approximately 10 frames/second, for example, and input to the multi screen synthesizing means 4 as the program video image information. In the multi screen synthesizing means 4, a plurality of video images of programs for promotion are respectively reduced and synthesized so that they are displayed divided into a prescribed number. For example, in case of twelve channels, a screen is divided into twelve and displayed.

The encoder 5 receives an output of the multi screen synthesizing means 4 and n sound input signals 2a-2n corresponding to the n analog video signal inputs for promotion, and compresses and encodes the same into a digital video image and sound.

On the other hand, the analog video signal inputs and sound input signals in the plurality of normal channels are respectively input to encoders 6a-6n provided in each program, respectively compressed and encoded into a digital video image and sound therein, and input to the multiplexing means 7 together with the output of the encoder 5, to be collected into a stream and output as the transport stream 8. At this time, corresponding information between display position of the video image of the program for each promotion and sound signals in each program, program character information in each program for each promotion, and corresponding information between the character information and the video image/sound of the program for each promotion are digitally encoded and are output as a stream of service information and as a transport stream 8. Thereafter, addition of an error correcting code and modulation are performed for the stream, which is transmitted in radio waves.

In the receiver's side illustrated in figure 2, a frequency is selected among broadcasting signals received by the antenna 9, by the tuner 10, to receive radio waves in digital broadcasting, and decoding and error correcting processing are performed. By the signal separating means 11, bit stream of (EPG) channel and SI are selected among digital signals (transport stream) received by the tuner 10, and program video image information/sound signals and program character information are separated and extracted by selecting PID in the MPEG based on the instruction from a multi screen management means 16 mentioned later. Program video image information in the multi screen corresponding to a video image stream ID specified by the multi screen management means 16 is reproduced by the video image reproducing means 14.

The multi screen management means 16 controls an operation of the video image allocating means 15 based on an input of remote controller of the viewer, and decides a program specified using a remote control inputting means 17 by the viewer referring to screen position information which has been transmitted as the SI. The video image allocating means 15 allocates only program video image information of the corresponding program, referring to the corresponding program video image information of program video image information in multi screen which has been reproduced by the video image reproducing means 14, and outputs the allocated video image information to the frame buffer 18 in the next stage. At this time, the video image allocating means 15 performs processing such as allocating program video image information in a specified range or reducing/enlarging the same as required. Allocation of the program video image information is performed by writing data into prescribed addresses in the frame buffer 18 based on the instruction from the multi screen management means 16 so that the allocated video image is displayed in a position on a screen specified by the viewer later.

The program character information separated by the signal separating means 11 is sorted/rearranged by the program information management means 13 and transmitted to the multi screen management means 16, and then synthesized with a video image by the video image synthesizing means 19 mentioned later.

Thus, program video image information of each program processed by the video image allocating means 15 is sequentially stored in the frame buffer 18 in the next stage, where a plurality of program video image information specified through the remote control inputting means 17 is stored.

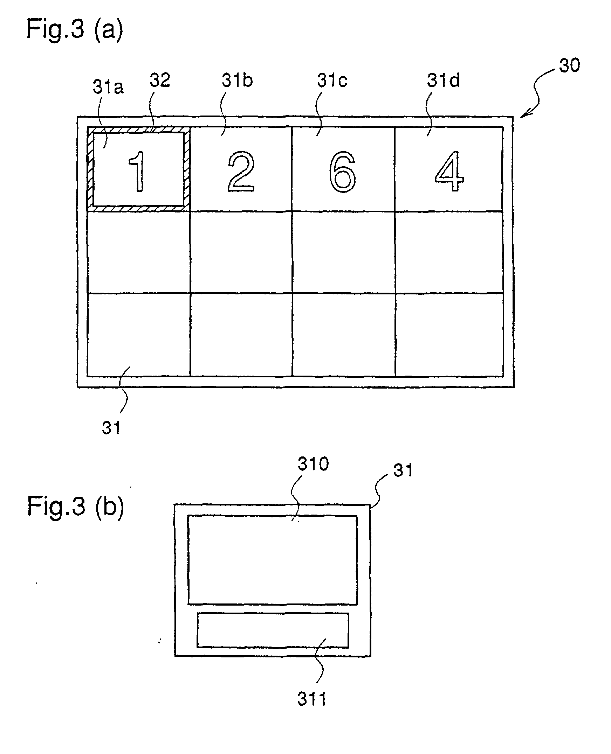

On completion of storage of data of all program video image information specified by one screen or the stream ID, the data is synthesized with a graphic such as program character information or a cursor. At this time, program video image information of a plurality of programs stored in the frame buffer 18 and program character information sorted/rearranged by the program information management means 13 are checked based on information which has been transmitted as service information, and respectively corresponding program video image information and program character information are correlated and synthesized. Figure 3(a) is a diagram illustrating a state in which program video image information processed described above is displayed on a screen 30 in the video image display means 21. The screen 30 is divided into twelve by a display cell 31 and program information of programs 1, 2, 6, 4 is displayed correspondingly to display cells 31a-31d disposed in upper left to right direction on the screen. Reference numeral 32 designates a rectangular cursor displayed in the display cell 31a. The cursor 32 can be moved to an arbitrary position on the screen in accordance with a signal input from the remote control means 17. A sound outputting means 20 operates together with the cursor 32 to reproduce a sound corresponding to program information of a selected program. Channels are switched by selecting one of the cells in the video image display means 21 (the screen 30) and pressing a full screen display button provided in a remote controller (not shown), and a program or a program reserve screen of the selected cell or the like is displayed over the screen 30. As illustrated in figure 3(b), program video image information 310 and program character information 311 are synthesized and displayed on each display cell 31.

Operations in accordance with the embodiment 1 are described. In the broadcasting station, program video image information and sounds of a plurality of programs are digitally encoded according to the MPEG standard to make them a promotion channel for one channel, and at least one promotion channel or more and video images and sounds of a plurality of normal programs are multiplexed and transmitted as the transport stream. In the receiver side, program video image information of a program included in a channel corresponding to a program specified by the viewer is extracted from one promotion channel or more transmitted as the multi screen referring to the packet ID of a stream and a position on the screen and a display position on the screen is moved as required. Therefore, contents of the promotion channel edited in the transmission station can be edited and displayed, specified by the viewer in the receiver and information of a desired program among many programs can be obtained with efficiency, so that efficiency in choosing a program is increased. Further, more information can be provided by transmitting the character information simultaneously as program information and synthesizing the same with program video image information of a corresponding program, followed by display.

A description is given of an apparatus for transmitting TV broadcasting programs according to an embodiment of the present invention. In the example, synthesis of program video image information of a plurality of programs on a screen (multi screen) as the promotion channel in the broadcasting station is transmitted. In the embodiment of the invention, individual program information is transmitted by time division as a stream in a promotion channel.

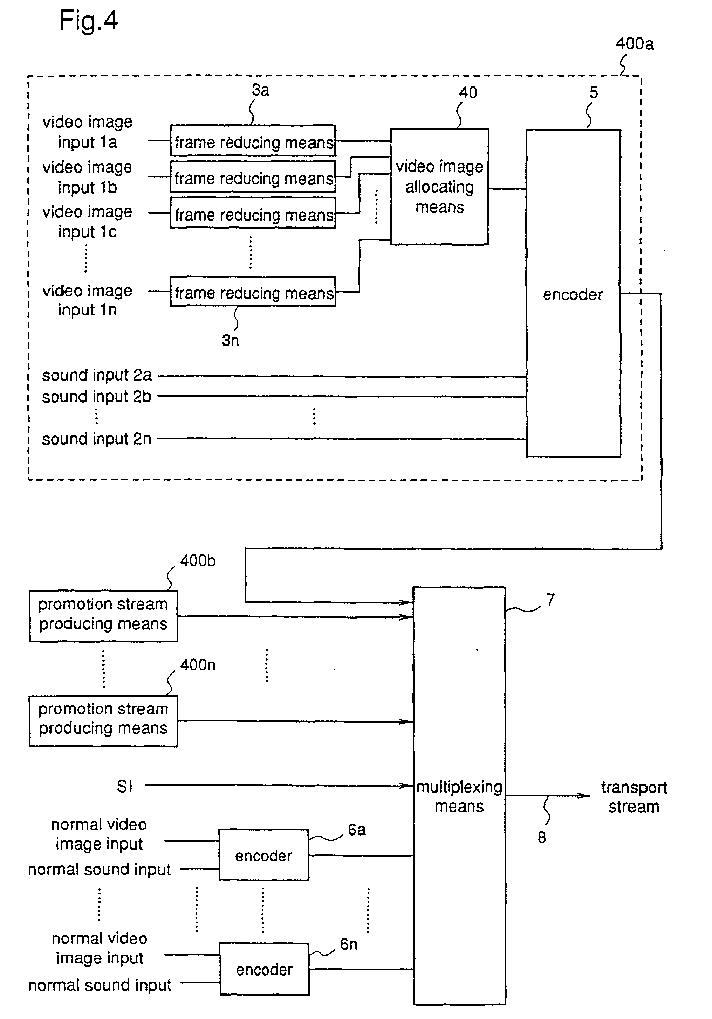

In figure 4, outputs of program information (video image/sound) for promotion of each program are sequentially switched by the video image allocating means 40 and are input sequentially to the encoder 5 in the next stage in such a manner that the stream ID is not input at the same time, and compressed and encoded into a digital video image and sound therein. The encoder 5 can manage sixteen programs at its most in case of MPEG.

A promotion stream producing means 400a for producing a multi screen comprises the components described above. Actually, a plurality of promotion stream producing means (400a-400n) are provided and can produce n promotion streams.

The multiplexing means 7 multiplexes n promotion streams output from the n promotion stream producing means 400a-400n and a plurality of normal programs and outputs the multiplexed streams and programs as a transport stream 8. At this time, program character information in each program for each promotion and corresponding information between the character information and video image/sound of the program for each promotion are digitally encoded and output as a stream of service information and simultaneously as the transport stream 8. Thereafter, addition of an error correcting code and modulation are performed for the stream, which is transmitted in radio waves.

On the other hand, the receiver basically comprises constructions as illustrated in figure 2. A promotion channel is selected among the transport stream 8 which has been transmitted and program video image information/sound signal and program character information included in program information of a program to be displayed as the multi screen prespecified by the viewer using the remote control inputting means 17 are respectively separated and extracted by the signal separating means 11 in figure 2. The program video image information is reproduced by the video image reproducing means 14 based on the instruction from the multi screen management means 16. Also, the program video image information is reduced/enlarged by the video image allocating means 15 as required and data is written into prescribed addresses in the frame buffer 18 so that the allocated video images will be displayed in a position on a screen specified by the viewer.

The video image synthesizing means 19 checks the program video image information obtained described above with the program character information output through the multi screen management means 16 using the packet ID of the stream and the stream ID in the MPEG as in the embodiment 1 and synthesizes the same so that they are displayed in the video image display means 21 as illustrated in figure 3(b).

In accordance with the embodiment of the invention, the video image and the sound of each program are respectively transmitted by time division as a stream in the promotion channel and the stream ID is assigned to each program in transmission, thereby contents of the promotion channel can be edited and displayed, specified by the viewer in the receiver and information of a desired program among many programs can be obtained with efficiency, so that efficiency in selecting a program is increased. In addition, a plurality of streams of the video image and the sound can be respectively transmitted through one promotion channel. Therefore, more program information about a program can be provided.

In the embodiments described above, a frame-reduced motion picture is employed as program video image information which is transmitted. Alternatively, a still picture may be employed, and can be transmitted as a motion picture when the still picture has a large transmission capacity.

The frame reducing means is provided in the preceding stage of the multi screen synthesizing means 4. Alternatively, one frame reducing means may be provided in the next stage of the multi screen synthesizing means 4. Also, when there is no limit on the transmission capacity, the frame reducing means may omitted.

A description has been given of a case where one screen is divided into twelve to display the program information. Alternatively, when program information not less than division number on a screen is demanded, a plurality of program information screens may be prepared in page specified system. In this case, preferably, the frame buffer 18 has a page-sized capacity, thereby high speed screen switching can be realized.

In the embodiment described above, program video images for promotion are employed to constitute the promotion channel. Alternatively, each program which is currently broadcasted is employed to constitute the promotion channel.

## Claims

1. Apparatus for transmitting a TV broadcasting program comprising:
a multiplexer (40, 7) for time-dividing video images of programs of a plurality of channels for promotion to produce an electronic program guide EPG channel consisting of the time-divided images, and for multiplexing and outputting the time-divided video images and video images of programs of normal channels.

2. Apparatus for receiving a TV broadcast, the apparatus being operable to receive, decode and display transmitted data relating to a channel for promotion, the apparatus comprising:
video image extracting means (12-16) for decoding the received data, extracting a selected video image of a program of a prescribed channel among the decoded data, and editing data of an electronic program guide EPG channel, thereby to create a new electronic program guide EPG screen video image; and
video image display position control means (16, 18) for controlling the display of the edited electronic program guide EPG screen video image so that the video image of the program of the extracted channel is displayed at a prescribed position on a divided screen.

3. Apparatus according to claim 2, wherein the video image extracting means comprises means for extracting a selected video image from video images of a plurality of channels arranged by screen division.

4. Apparatus according to claim 2, wherein the video image extracting means comprises means for extracting a selected video image from multiple time divided images.

5. Apparatus according to claim 2, 3 or 4, further comprising program character information synthesising means (19) for synthesising program character information based on received program character information with respect to each program, the program character information representing a content corresponding to a video image displayed in a prescribed position by the video image display position control means, to be displayed with the video image on said divided screen.

6. Apparatus according to claim 2, 3 4 or 5, further comprising:
means (16, 19) for generating a rectangular cursor for display in a display cell of said divided screen, the cursor being movable to an arbitrary position on the divided screen by external input signals to select a prescribed display cell, and
means (12) for reproducing an audio signal corresponding to program information of the program of the selected display cell.

## Patentansprüche

1. Vorrichtung zum Senden eines Fernsehrundfunkprogramms mit
einem Multiplexer (40, 7) zum Zeitmultiplexen von Videobildern von Programmen von einer Vielzahl von Werbekanälen, um einen aus zeitgemultiplexten Bildern bestehenden elektronischen Programmführer-Kanal (EPG-Kanal) zu erzeugen, und zum Multiplexen und Ausgeben der zeitgemultiplexten Videobilder und von Videobildern von Programmen normaler Kanäle.

2. Vorrichtung zum Empfangen einer Fernsehsendung, die so arbeiten kann, dass sie gesendete Daten, die sich auf einen Werbekanal beziehen, empfängt, decodiert und anzeigt; mit
einem Videobild-Gewinnungsmittel (12 - 16) zum Decodieren der empfangenen Daten, zum Gewinnen eines gewählten Videobilds eines Programms eines vorgegebenen Kanals aus den decodierten Daten und zum Editieren von Daten eines elektronischen Programmführer (EPG)-Kanals, um dadurch ein neues Videoschirmbild eines elektronischen Programmführers (EPG) zu erzeugen, und
einem Videobild-Anzeigepositions-Steuerungsmittel (16, 18) zum Steuern der Anzeige des editierten Videoschirmbilds des elektronischen Programmführers (EPG), sodass das Videobild des Programms des abgefragten Kanals an einer festgelegten Position auf einem geteilten Bildschirm angezeigt wird.

3. Vorrichtung nach Anspruch 2, **dadurch gekennzeichnet, dass** das Videobild-Gewinnungsmittel ein Mittel zum Gewinnen eines gewählten Videobilds aus mittels Bildschirmteilung angeordneten Videobildern einer Vielzahl von Kanälen aufweist.

4. Vorrichtung nach Anspruch 2, **dadurch gekennzeichnet, dass** das Videobild-Gewinnungsmittel ein Mittel zum Gewinnen eines gewählten Videobilds aus mehreren zeitgemultiplexten Bildern aufweist.

5. Vorrichtung nach Anspruch 2, 3 oder 4, die außerdem ein Programmzeicheninformations-Synthetisierungsmittel (19) zum Synthetisieren von Programmzeicheninformationen anhand der empfangenen Programmzeicheninformatiorien für jedes Programm aufweist, wobei die Programmzeicheninformationen einen Inhalt verkörpern, der einem Videobild entspricht, das in einer festgelegten Position vom Videobild-Anzeigepositions-Steuerungsmittel angezeigt wird, um mit dem Videobild auf dem geteilten Bildschirm angezeigt zu werden.

6. Vorrichtung nach Anspruch 2, 3, 4 oder 5, die außerdem
ein Mittel (16, 19) zum Erzeugen eines rechteckigen Cursors zum Anzeigen in einer Anzeigezelle des geteilten Bildschirms, wobei der Cursor von externen Eingangssignalen in eine beliebige Position auf dem geteilten Bildschirm bewegt werden kann, um eine vorgegebene Anzeigezelle zu wählen, und
ein Mittel (12) zum Wiedergeben eines Audiosignals, das Programminformationen des Programms der gewählten Anzeigezelle entspricht, aufweist.

## Revendications

1. Dispositif destiné à transmettre un programme de diffusion de télévision comprenant :
un multiplexeur (40, 7) destiné à répartir dans le temps des images vidéo de programmes en une pluralité de canaux de promotion afin de produire un canal de guide de programmation électronique (EPG) constitué des images réparties dans le temps, et destiné à multiplexer et à fournir en sortie les images vidéo réparties dans le temps et les images vidéo de programmes de canaux normaux.

2. Dispositif destiné à recevoir une diffusion de télévision, le dispositif pouvant être mis en oeuvre pour recevoir, décoder et afficher des données transmises se rapportant à un canal de promotion, le dispositif comprenant :
un moyen d'extraction d'image vidéo (12 à 16) destiné à décoder les données reçues, à extraire une image vidéo sélectionnée d'un programme d'un canal prescrit parmi les données décodées, et à éditer des données d'un canal de guide de programmation électronique (EPG), afin de créer ainsi une nouvelle image vidéo sur l'écran de guide de programmation électronique (EPG), et
un moyen de commande de position d'affichage d'image vidéo (16, 18) destiné à commander l'affichage de l'image vidéo sur l'écran de guide de programmation électronique (EPG) édité de sorte que l'image vidéo du programme du canal extrait est affichée à une position prescrite sur un écran divisé.

3. Dispositif selon la revendication 2, dans lequel le moyen d'extraction d'image vidéo comprend un moyen destiné à extraire une image vidéo sélectionnée à partir d'images vidéo d'une pluralité de canaux agencés par une division d'écran.

4. Dispositif selon la revendication 2, dans lequel le moyen d'extraction d'image vidéo comprend un moyen destiné à extraire une image vidéo sélectionnée à partir de multiples images réparties dans le temps.

5. Dispositif selon la revendication 2, 3 ou 4, comprenant en outre un moyen de synthèse d'informations de caractères de programme (19) destiné à synthétiser des informations de caractères de programme sur la base des informations de caractères de programme reçues par rapport à chaque programme, les informations de caractères de programme représentant un contenu correspondant à une image vidéo affichée en une position prescrite par le moyen de commande de position d'affichage d'image vidéo, devant être affichées avec l'image vidéo sur ledit écran divisé.

6. Dispositif selon la revendication 2, 3, 4 ou 5, comprenant en outre :
un moyen (16, 19) destiné à générer un curseur rectangulaire en vue de l'affichage d'une cellule d'affichage dudit écran divisé, le curseur étant mobile vers une position arbitraire sur l'écran divisé grâce à des signaux d'entrée externes afin de sélectionner une cellule d'affichage prescrite, et
un moyen (12) destiné à reproduire un signal audio correspondant à des informations de programme du programme de la cellule d'affichage sélectionnée.
